# EUROPEAN PATENT SPECIFICATION

(11) **EP 3 230 749 B1**
(45) Date of publication and mention of the grant of the patent: **19.06.2019**
(21) Application number: 15808588.6
(22) Date of filing: 11.12.2015
(51) Int. Cl.: G01P 15/09

(54) **PIEZOELECTRIC SENSOR ELEMENT FOR A SHEAR MODE ACCELEROMETER**
PIEZOELEKTRISCHES SENSORELEMENT FÜR EINEN SCHER-MODUS-BESCHLEUNIGUNGSMESSER
ÉLÉMENT DE CAPTEUR PIÉZOÉLECTRIQUE POUR UN ACCÉLÉROMÈTRE À MODE DE CISAILLEMENT

(30) Priority: 11.12.2014 EP 14197436
(43) Date of publication of application: 18.10.2017
(73) Proprietor: Brüel & Kjaer Sound & Vibration Measurement A/S, 2850 Naerum (DK)
(72) Inventor: JØRGENSEN, Henrik Ingerslev, 2300 Copenhagen S (DK); ANDRESEN, Søren, 2100 Copenhagen Ø (DK); KIRKELUND, Morten, 2730 Herlev (DK)
(74) Representative: Guardian IP Consulting I/S
(86) International application number: PCT/EP2015/079442
(87) International publication number: WO 2016/092081

(56) References cited:
- EP-A2- 0 401 669
- DE-A1- 3 019 551
- GB-A- 1 286 987
- GB-A- 1 393 312
- GB-A- 2 224 599
- US-A- 5 398 540
- US-A- 5 824 904
- US-A- 6 148 671
- US-B1- 6 747 399

## Description

The present invention relates in one aspect to a piezoelectric shear mode sensor element for a shear mode sensor device, the sensor element comprising a sensor block made of a piezoelectric material having an intrinsic polarization axis, wherein the piezoelectric material is also pyroelectric, wherein the sensor block in an axial direction has a first end and a second end and wherein the sensor block in lateral directions perpendicular to the axial direction has lateral side faces, the sensor element further comprising sensor electrodes adapted for capturing a shear mode sensor signal, wherein the sensor electrodes comprise a first sensor electrode arranged at the first end of the sensor block and a second sensor electrode arranged at the second end of the sensor block. In a further aspect, the invention relates to a method of producing a piezoelectric sensor element for use in a shear mode sensor device. In a particular aspect of the invention the sensor device is an accelerometer device.

### BACKGROUND OF THE INVENTION

Accelerometer devices are used for measuring dynamic mechanical quantities in a large variety of applications ranging from end user devices to monitoring of heavy industrial equipment. A common design for accelerometer devices uses one or more sensor elements made of a piezoelectric material with sensor electrodes attached to opposite faces thereof. A first face of the piezoelectric material is associated with a first end clamped to a base, and a further face is associated with a second end, which is typically provided with a seismic mass. A displacement of the seismic mass with respect to the base results in a deformation of the piezoelectric material, which will generate a piezoelectric response. The sensor electrodes are for capturing the piezoelectric response as an electrical sensor signal.

An accelerometer device determines the piezoelectric response of the material to deformation under dynamic mechanical loads, i.e. mechanical loads acting on the sensor element that are changing as a function of time. Examples of dynamic mechanical loads are vibrational modes. When measuring vibrations of a given mechanical body, the base is typically attached to the body to be measured. Vibrations of the body are transferred via the base to the clamped first end of the piezoelectric material. Due to the inertia of the seismic mass, the second end of the piezoelectric material does not or at least not immediately follow the movement of the first end, thereby causing a dynamic deformation resulting in a dynamic piezoelectric response that may be captured as a sensor signal by appropriately placed electrodes.

The sensor signal captured by the sensor electrodes is then typically passed to read-out electronics that provides an output representative of the sensor signal. For example, the read-out electronics may implement one or more processing functions, such as amplification, filtering, digitization, analogue signal processing and/or digital signal processing. The output may be presented, displayed, recorded, passed to a monitoring system, trigger events/alarms, and/or used for subsequent calculations or further signal processing.

The sensor electrodes are arranged with respect to the intrinsic polarization axis in a configuration depending on the type of mechanical deformation to be exploited for measuring the piezoelectric response. For example, in a compression mode configuration a compressional deformation of the piezoelectric material is exploited and the first and second end faces carrying respective sensor electrodes are arranged such that at least a major component of the surface normal of each sensor electrode is essentially parallel to the intrinsic polarization axis. In a shear mode configuration a shear deformation of the piezoelectric material is exploited. In a shear mode configuration, the first and second end faces carrying respective sensor electrodes are arranged essentially parallel to the intrinsic polarization axis. That is, in the shear mode configuration the surface normal of each sensor electrode is essentially perpendicular to the intrinsic polarization axis. Thereby, the piezoelectric response to a shear deformation in a direction parallel to the intrinsic polarization axis of the piezoelectric material is captured by the sensor electrodes.

Many of the piezoelectric materials of commercial interest for accelerometer applications also exhibit pyroelectric properties, where charges build up due to a charge separation in the material when subjected to temperature changes. The charge separation driven by the pyroelectric effect occurs in a direction parallel to the intrinsic polarization axis. During temperature changes the pyroelectric charge separation therefore creates an artefact signal which will be superimposed to piezoelectric signals when measuring in a direction parallel to the intrinsic polarization axis, such as in a compression mode configuration. It is therefore commonly perceived that such artefacts due to pyroelectric charge separation are overcome by the shear mode configuration, since sensor signal in the shear mode configuration is captured in a direction perpendicular to the intrinsic polarization axis, where the pyroelectric contribution to the sensor signal is theoretically negligible.

Such a shear mode accelerometer device is disclosed in JP H07-244069. It is emphasized that the particular arrangement of the sensor electrodes with respect to the polarization axis of the piezoelectric material results in an improved accelerometer signal, which is not affected by the pyroelectric effect.

Another shear mode accelerometer device is disclosed in GB 2224598. The document addresses the issue of precise alignment of sensor electrodes with respect to the polarization axis of the piezoelectric material and provides a device configuration that is less sensitive to misalignment.

However, while the shear mode configuration avoids capturing a superimposed artefact signal due to the sensor electrode orientation, it is one merit of the present invention to recognize that in practice the pyroelectric effect still may affect the measured signal in a rather significant way. This is due to the fact that pyroelectric charge separation still takes place when such shear mode sensor elements are subjected to significant temperature changes and generates a charge build-up on edges (facettes / faces / sides) of the piezoelectric sensor element with a surface normal that has a component parallel to the polarization axis. It is a further merit of the present invention to recognize that this charge build-up causes spontaneous discharge noise in the sensor signal, due to current pulses and random leak currents along the lateral edges of the sensor element. The problem is particularly prominent when the rate of temperature change is significant, such as in high temperature applications with large and fast temperature changes. For example, high temperature applications may include measurements performed above about 200°C, wherein e.g. a rate of temperature change of about 1°C/min has been observed to be significant with respect to the observation of discharge noise including both current pulses and random leak currents. With increasing rates of the temperature change over time, also the discharge noise increases.

DE 3019551 discloses a piezoelectric sensor in a shear mode configuration, where a thermal expansion coefficient of a support structure is designed to match the thermal expansion coefficient of the pyroelectric sensor elements in order to mitigate the influence of temperature changes on the measurement result.

GB 1286987 shows in one embodiment a shear mode sensor with sensor electrodes on axial end faces thereof (front and rear), and further two compensation electrodes arranged on opposing lateral side faces (top and bottom). The compensating electrodes of GB 1286987 address systematic artefacts in the signal collected by the axial signal electrodes resulting from an imperfect alignment of the crystal's polarization axis with the axial end faces. In GB 1286987, these systematic artefacts are countered by collecting oppositely polarized charges created by the pyroelectric effect and feeding these charges as compensation to respective signal electrodes. A first compensating electrode is connected to a first signal electrode, and a second compensating electrode is connected to a second signal electrode.

None of the mentioned prior art shear mode accelerometer devices addresses the issue of spontaneous discharge noise resulting from pyroelectric charge build-up on the lateral edges of a shear mode piezoelectric sensor element during temperature sweeps.

One object of the invention is therefore to provide a piezoelectric shear mode sensor element overcoming or at least reducing the above-mentioned problem of spontaneous discharge noise in a shear mode accelerometer device. A further object of the invention is to provide a method of producing such a piezoelectric shear mode sensor element.

Besides in accelerometer devices, the shear mode deformation of piezoelectric material may also be used as a transduction principle in other types of sensor devices, such as deformation sensors, displacement sensors, strain sensors, temperature sensors, or pressure sensors. In a first step, it is therefore recognized by the present invention that such sensor devices using a piezoelectric shear mode sensor element may also suffer from pyroelectric noise as discussed above.

A broader object of the invention is therefore to provide a piezoelectric shear mode sensor element overcoming or at least reducing the above-mentioned problem of spontaneous discharge noise in a shear mode sensor device. A further object of the invention is to provide a method of producing such a piezoelectric shear mode sensor element.

### SUMMARY OF THE INVENTION

According to one aspect, the object is achieved by a piezoelectric shear mode sensor element for a shear mode sensor device, the sensor element comprising
- a sensor block made of a piezoelectric material having an intrinsic polarization axis, wherein the piezoelectric material is also pyroelectric, wherein the sensor block in an axial direction has axial ends, and wherein the sensor block in lateral directions perpendicular to the axial direction has lateral side faces; and
- sensor electrodes arranged at the axial ends of the sensor block, the sensor electrodes being adapted for capturing a shear mode sensor signal;
wherein the sensor element further comprises
- a discharge guard made of an electrically conductive material, the discharge guard being adapted to locally alter and/or rearrange charges in response to pyroelectric displacement charges on the lateral side faces of the sensor block.

The piezoelectric shear mode sensor element is for use in a sensor device assembly configured for transducing a shear mode deformation of the piezoelectric element into an electric and/or optical output. In a particularly advantageous embodiment, the piezoelectric shear mode sensor element is adpted for use in an accelerometer device assembly for transducing a dynamic shear mode deformation of the piezoelectric element into an electric and/or optical output as also discussed above. The sensor element is configured for performing shear mode measurements in a conventional manner. The sensor element comprises a block made of a piezoelectric material. The piezoelectric material has an intrinsic polarization axis. The sensor block is formed such that a shear deformation of the block in a direction parallel to the intrinsic polarization axis, due to the piezoelectric effect, generates polarization charges that can be sensed in a direction essentially perpendicular to the intrinsic polarization axis. The sensor electrodes are arranged to capture a sensor signal generated by piezoelectrically generated polarization charges in the axial direction essentially perpendicular to the intrinsic polarization axis. Thereby direct artefact contributions of pyroelectrically generated polarization charges to the sensor signal are suppressed or at least reduced. The suppression of direct pyroelectrical artefact contributions to the sensor signal depends on the alignment af the axial direction with a direction perpendicular to the intrinsic polarization axis. According to some embodiments, the axial direction may be essentially perpendicular to the intrinsic polarization axis to within alignment tolerances of ±20°, ±10°, ±5°, or even ±1 °. Typical alignment tolerances may be about 2°- 3°.

Any shear mode accelerometer design having sensor electrodes arranged on a sensor block for measuring in an axial direction essentially perpendicular to the intrinsic polarization axis may be improved by the present invention. This may include e.g. slab shaped sensor blocks with sensor electrodes applied to plane-parallel opposite faces of the slab, or even toroidal geometries of the sensor block with a polarization axis along the axis of rotational symmetry. Such a toroidal shape sensor element may e.g. be used for measuring by using a shear deformation in a direction parallel to the axis of rotational symmetry. In a toroidal geometry, the sensor electrodes are arranged to measure the polarization in a radial direction perpendicular to the axis of rotational symmetry, i.e. the radially inner end is taken as the first end for carrying the first sensor electrode and the radially outer end is taken as the second end for carrying the second sensor electrodes (or vice versa), whereas the end faces as seen in a direction along the axis of rotational symmetry are lateral end faces with respect to the shear mode sensor electrodes. The sensor electrodes are adapted for capturing a shear mode sensor signal. The specific shape of first and second sensor electrodes arranged at respective first and second axial ends of the sensor block depends on the actual shape and orientation of the respective first or second ends.

The discharge guard is made of a conductive material with free charge carriers that can freely rearrange within the discharge guard. Typically, the conductive material has a metallic conductivity. The discharge guard is thus adapted to collect surface charges, such as pyroelectrically generated polarization charges, from the lateral side faces of the sensor block. Preferably, one or more guard electrodes are arranged at least on portions of the lateral side faces that are prone to accumulate pyroelectric polarization charges. The guard electrode may be connected to a charge reservoir adapted to provide charges to the guard electrode as necessary. Alternatively or in addition thereto, the guard electrode itself may act as a charge reservoir with respect to local areas where charges need to be provided to or removed from. When pyroelectric polarization charges accumulate on a lateral surface, due to a change in temperature, the discharge guard responds by locally altering and/or rearranging free charge carriers on the one or more guard electrodes so as to counteract the pyroelectric displacement charges. The pyroelectric charges that are the root cause for the discharge noise signal are thereby counteracted to avoid or at least reduce charge build-up on the lateral side faces, thereby suppressing or at least reducing noise resulting from random discharge processes, such as discharge pulses and noisy leak currents.

The electrical resistance for locally providing and/or removing free charges so as to alter and/or rearrange charges on the one or more guard electrodes should preferably be less than the resistance for the spontaneous random discharge currents. Preferably, the discharge guard operates essentially independent of the sensor electrodes so as to avoid cross-talk between the electrical response of the discharge guard to the pyroelectric effect on the one hand, and the piezoelectric shear mode deformation induced signal on the sensor electrodes on the other hand. Preferably, the discharge guard is therefore effectively isolated from the sensor electrodes.

Advantageously according to some embodiments, the discharge guard operates essentially independent of at least one of the sensor electrodes, but may be electrically connected to a corresponding counter electrode, which, further advantageously may be used as reference for the sensor signal.

Further according to some embodiments, the discharge guard comprises at least a first guard electrode arranged on a first lateral side face of the sensor block, the first lateral side face comprising a surface normal with a component that is parallel to the intrinsic polarization axis. By placing the first guard electrode as close as possible to a portion of the first lateral side face where pyroelectric displacement charges will occur during a temperature change, a rearrangement of charges on the first guard electrode will allow to compensate polarization charges occurring on that first lateral side face.

Further according to some embodiments, the discharge guard further comprises at least a second guard electrode arranged on and/or adjacent to a second lateral side face of the sensor block, the second lateral side face comprising a surface normal with a component that is anti-parallel to the intrinsic polarization axis. By placing the second guard electrode as close as possible to a portion of the second lateral side face where pyroelectric displacement charges will occur during a temperature change, a rearrangement of charges on the second guard electrode will allow to compensate polarization charges occurring on that second lateral side face. The pyroelectric effect generates a polarization in the direction of the intrinsic polarization axis. Opposite charges therefore accumulate at lateral surfaces that face in generally opposite directions parallel/anti-parallel to the intrinsic polarization axis. In combination, the first and second guard electrodes are arranged to counteract these opposite charges from respective lateral surfaces where pyroelectrically separated charges may accumulate.

According to a preferred embodiment of a sensor element the discharge guard further comprises a charge transfer element connecting the first and second guard electrodes to each other. A charge transfer element, which may be attached separately or deposited directly onto the sensor element, connects the first and second electrodes with each other, thereby providing a charge transfer path for transferring charges between the first and second guard electrodes on oppositely oriented lateral side faces. By connecting the first and second guard electrodes they may act as charge reservoirs for each other. Typically, the first and second guard electrodes are connected by providing a galvanic connection in the form of a lead between the first and second guard electrodes, but other electrical arrangements allowing for a charge transfer between the first and second guard electrodes are also possible, such as a connection including a capacitive coupling. Preferably, the charge transfer path has a conductivity exceeding that of any electrically conducting parasitic path, such as spontaneous recombination paths via leak currents and discharge pulses, or any conductive path from the guard electrodes to at least one of the sensor electrodes. Generally, a charge transfer path may be configured to have an electrical resistance that is dimensioned as indicated above.

Preferably, the discharge guard is floating to ensure charge neutrality for counteracting of lateral polarization charges that have been separated by the pyroelectric effect. However, according to some embodiments the guard electrodes may also be connected to a common ground of the sensor element. Alternatively, when mounted in an accelerometer device, the guard electrodes may also be connected to a common ground of the accelerometer device such as a chassis ground of the sensor assembly or of the device package. The common ground may act as the charge transfer element and/or as a charge reservoir.

Further according to some embodiments, the first and second guard electrodes are integrally formed with the charge transfer element, e.g. as a metallization arranged on the lateral side faces of the sensor block. Preferably, the metallization covers at least a portion of the lateral side faces. An integrated configuration provides a compact and self-contained sensor element for building high quality accelerometer devices with improved noise characteristics.

Further according to some embodiments, the discharge guard comprises a metallization applied on the lateral side faces of the sensor block. Further according to some embodiments, the discharge guard is a metallization applied to the lateral side faces of the sensor block. Further according to some embodiments, the discharge guard includes an additional metallization applied to first and/or second axial end faces of the sensor block along lateral side faces of the sensor block.

Further according to some embodiments, the portion of the lateral end faces covered by the metallization is at least 50%, alternatively at least 70%, preferably at least 90% of the total area of the lateral side faces of the sensor block having a surface normal component parallel to the polarization axis. A larger coverage of the lateral side faces by the metallization is better for achieving a satisfactory collection and recombination of spurious charges.

Further according to some embodiments, the metallization is selected from the group of chromium, titanium, nickel, gold, and alloys thereof. Thereby the guard electrodes and charge transfer element are compatible with use in high temperature devices including devices for operation at temperatures up to about 400°C.

Further according to some embodiments, the metallization is selected from the group of palladium, platinum, ruthenium, rhodium, osmium, iridium, and alloys thereof. Thereby the guard electrodes and charge transfer element are compatible with use in high temperature devices including devices for operation at temperatures also above 400degC. As mentioned above, high temperature applications may include measurements performed above about 200°C, wherein e.g. a rate of temperature change of about 1°C/min has been observed to be significant with respect to the observation of discharge noise including both current pulses and random leak currents. With increasing rates of the temperature change over time, also the discharge noise increases. In high temperature applications, the sensor element has to be suited for operating temperatures of at least 200°C, typically ranging up to about 400°C-500°C, alternatively ranging up to about 650°C, or even ranging beyond 650°C.

Further according to some embodiments, the piezoelectric material is one of lithium niobate, tourmaline, Yttrium Calcium Oxyborate (YCOB), bismuth titanate, barium titanate, lead metaniobate, lithium tantalate, lead zirconium titanate (PZT), polycrystalline ceramics, and ferroelectric relaxor-based materials, such as lead magnesium niobate titanate (PMNT) and ternary lead indium niobate titanate (PIMNT).

Further according to some embodiments, the sensor block comprises an opening penetrating the sensor block in the axial direction, the opening being defined by inwardly facing lateral side faces. In addition to outwardly facing lateral side faces, the sensor block may further comprise inwardly facing lateral side faces defining an opening. The opening may be a central bore in the axial direction, wherein the opening is for passing fastening means in a device assembly, such as a clamping bolt carrying a seismic mass and clamping a stacked assembly including the sensor element to a base in order to form a shear mode accelerometer.

Further according to some embodiments, the inwardly facing lateral side faces are provided with a further discharge guard made of an electrically conductive material with free charge carriers. An opening passing through the sensor block in an axial direction will have lateral side faces, on which charges may accumulate during temperature sweeps, due to pyroelectric polarization. Such charge accumulation on inwardly facing side walls may also contribute significantly to the discharge noise. According to some embodiments, the charge accumulation can be countered and the related discharge noise by also providing one or more guard electrodes on these lateral side faces and providing a discharge mechanism analogue to the ones discussed above for neutralizing the pyroelectric polarization charges, thereby forming a discharge guard on the inwardly facing lateral side faces.

Further according to some embodiments, the further discharge guard is electrically connected to the discharge guard. Preferably the electrical connection is a galvanic connection. By electrically connecting the further discharge guard associated with the axial opening to the above-mentioned discharge guard so as to allow for charge transfer between the two, undesired charging effects between the discharge guards are avoided. More generally, the sensor element may comprise a first discharge guard as described above and one or more further discharge guards. In order to avoid undesired charging between multiple discharge guards they are preferable all electrically connected to each other. Further preferably, all guard electrodes of a sensor element are electrically connected with each other to form a single discharge guard, thereby avoiding any charge separation/accumulation on (isolated) electrodes that are floating with respect to each other. Thereby it is ensured that the spurious charges generated by the pyroelectric effect can be reliably counteracted.

Further according to some embodiments of a sensor element, the sensor electrodes are planar and arranged on respective planar end faces of the sensor block (102). Preferably, first and second sensor electrodes are plane parallel with each other to within fabrication tolerances. Furthermore, first and second end faces are oriented in opposite axial directions to within alignment tolerances. Planes defined by first and second planar end faces are parallel to *n_{P}* to within alignment tolerances. An axial direction is typically perpendicular to a surface vector of the axial end faces to within alignment tolerances.

According to a further aspect of the invention, a shear mode accelerometer comprises a piezoelectric sensor element according to any of the above-mentioned embodiments, wherein the first end of the sensor element is attached to a base and the second end of the sensor element is attached to a seismic mass. The accelerometer device may further comprise read-out electronics. Read-out electronics may be integrated with the sensor in a single package or at least partially be located remote from the sensor, e.g. for measurements in harsh environments which would affect the read-out electronics. The accelerometer may further be configured for operation at high temperatures, such as temperatures above about 150°C, or above 200°C. At temperatures exceeding about 150°C to 200°C, read-out electronics for processing the sensor signal captured from the sensor element is typically no longer integrated within the same housing as the sensor element, but located remote from the location of the measurement.

According to a yet further aspect of the invention, a method of producing a sensor element according to any of the mentioned embodiments is provided. The method comprises
- providing a wafer of a piezoelectric material, wherein the intrinsic polarization axis of the piezoelectric material is oriented parallel to a plane defined by the wafer and wherein an axial direction is perpendicular to said plane,
- for each sensor element, forming at least a first sensor electrode on a first side of the wafer and at least a second sensor electrode on a second side of the wafer in axial alignment with the first electrode,
- cutting the wafer to obtain individual sensor elements, and
- for each sensor element, forming a discharge guard of an electrically conductive material adapted to locally alter and/or rearrange charges in response to pyroelectric displacement charges on the lateral side faces of the sensor element.

The method allows for a reliable and reproducible production of the sensor element. Preferably, the method is used for simultaneously fabricating a plurality of sensor elements on the same wafer. By producing a plurality of sensor elements on the same wafer, a reliable production of sensor elements with a high reproducibility of the characteristics of the produced sensor elements can be achieved. A first side of the wafer, which may also be referred to as a front side, corresponds to the first end of the piezoelectric material. A second side of the wafer, which may also be referred to as a back side, corresponds to the second end of the piezoelectric material. First and second sensor electrodes are arranged on the front and back side, respectively. For a given sensor element, the first and second sensor electrodes are axially aligned with each other in such a way that when cutting out the sensor element, the front side carries a first sensor electrode and the back side carries a corresponding second sensor electrode. While the polarization axis lies in the wafer plane, the axial direction is oriented perpendicular to the wafer plane. The terms parallel and perpendicular are to be understood to within fabrication tolerances. Also, the term axial alignment is to be understood within fabrication tolerances.

The individual sensor elements are obtained by cutting the wafer. The cut faces form lateral side faces of the sensor element. Depending on their actual orientation with respect to the intrinsic polarization axis, these cut faces may therefore be subject to pyroelectric charging effects under varying temperature. A discharge guard with guard electrodes is therefore formed on these cut faces. Preferably, the discharge guard comprises at least a first guard electrode, a second guard electrode, and a charge transfer element. As discussed above, the first and second guard electrodes are arranged to collect charges from oppositely facing lateral side faces with a surface normal having a component that is parallel/anti-parallel to the intrinsic polarization axis. Thereby, the above-mentioned advantages of a discharge guard are achieved.

According to some embodiments, the sensor block is box-shaped with a rectangular outline. Preferably for such rectangular box-shaped sensor elements, the direction of cutting is aligned with the intrinsic polarization axis such that one pair of cut faces is parallel to the intrinsic polarization axis, and a second pair of cut faces is perpendicular thereto. In such a configuration, chiefly the second pair of cut faces will be subject to pyro-electrical polarization effects.

Further according to some embodiments of the method, forming the discharge guard comprises applying a metallization on lateral side faces of each of the sensor elements.

Further according to some embodiments of the method, the first and second electrodes are integrally formed with the charge transfer element as a metallization arranged along lateral side faces of the sensor element.

Further according to some embodiments of the method, forming a sensor electrode comprises metallizing axial end faces of the sensor block and/or forming a discharge guard comprises applying a metallization on lateral side faces of the sensor block. Forming the sensor electrodes and/or the discharge guard implies, in addition to the metallization step, defining the respective electrodes in the metallization layer by a suitable patterning technique. Suitable patterning techniques include photolithographic masking techniques (e.g. lift-off), shadow mask techniques, or techniques of patterning by removing material in selected areas after deposition, e.g. by wet etching, dry etching or milling.

Further according to some embodiments of the method, at least forming the first and second sensor electrodes includes patterning by photolithographic pattern definition, metallization and subsequent lift-off. Photolithographic pattern definition, metallization and subsequent lift-off techniques are of particular interest where a high spatial resolution of the metallization pattern is desired.

Further according to some embodiments of the method, at least forming the first and second sensor electrodes includes patterning by metallization through a shadow mask. A shadow mask technique is more simple to apply and less demanding with respect to the infrastructure of the production facilities than e.g. photolithographic techniques. Such a technique may be applicable to forming metallization patterns with a less demanding spatial resolution as compared to photolithographic techniques, such as a spatial resolution in the microscale.

Further according to some embodiments, the method further comprises machining axial openings penetrating the wafer in the axial direction. Machining axial openings may be performed by any suitable technique, such as laser cutting, reactive ion etch, or water jet cutting.

Further according to some embodiments of the method, machining the openings is performed prior to forming the first and second sensor electrodes. Machining the openings prior to forming the first and second sensor electrodes, e.g. by a patterning metallization technique, has the advantage that the inwardly facing lateral side faces of the axial openings may be metallized at the same time, thereby providing a discharge guard to these lateral side faces in the same fabrication steps.

### BRIEF DESCRIPTION OF THE DRAWINGS

Advantageous embodiments of the invention will be described in more detail in the following with reference to the appended drawings, which show in
FIG. 1 a perspective view of a sensor element without a discharge guard,
FIG. 2 a front elevation of the sensor element of Fig.1,
FIG. 3 a side elevation of the sensor element of Fig.1,
FIG. 4 a schematic view of a shear mode accelerometer assembly,
Fig. 5 an example of a charge measurement in the time domain for a sensor element without discharge guard in an accelerometer assembly,
Fig. 6 a front elevation of a sensor element with a discharge guard,
Fig. 7 a side elevation of the sensor element of Fig.6,
Fig. 8a a perspective view of a sensor element with a discharge guard according to one embodiment,
Fig. 8b a perspective view of a sensor element with a discharge guard according to a further embodiment,
Fig. 9 a perspective view of a sensor element with a discharge guard according to a yet further embodiment,
Fig. 10 a diagram showing a statistical analysis of discharge pulses observed in the sensor element with discharge guard of Fig.8a as compared to the sensor element without discharge guard of Fig.1,
Fig. 11 a diagram showing a statistical analysis of discharge pulses observed in the sensor element with discharge guard of Fig.8b as compared to the sensor element without discharge guard of Fig.1,
Fig. 12 a noise spectrum for a sensor element without a discharge guard during a temperature sweep.
Fig. 13 a noise spectrum for a sensor element with discharge guards during a temperature sweep,
Fig. 14 a noise spectrum for a sensor element maintained at room temperature during the measurement, and in
Fig. 15a/b front and back side of a sensor element with a discharge guard according to a yet further embodiment as seen in a perspective view.

### DETAILED DESCRIPTION

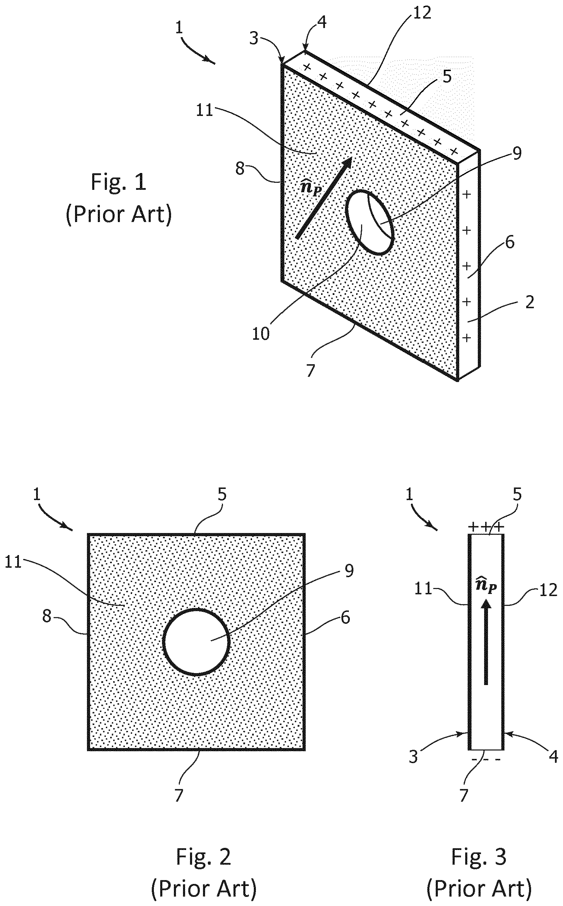

Figs.1 - 3 show different views of a piezoelectric sensor element 1 in a shear mode configuration without a discharge guard. The sensor element 1 comprises a sensor block 2 made of a piezoelectric material having an intrinsic polarization axis *n_{P}* as indicated by respective arrows in Fig.1 and Fig.3. The sensor block 2 has a first end 3 and a second end 4 as seen in an axial direction perpendicular to the intrinsic polarization axis *n_{P}*. Further, the sensor block 2 has outwardly facing lateral side faces 5, 6, 7, 8 as seen in lateral directions perpendicular to the axial direction. The sensor block of the embodiment shown in Figs. 1-3 has a generally rectangular box-shape with plane parallel first and second end faces 3, 4. The first and second end planes 3, 4 are cut parallel to the intrinsic polarization axis *n_{P}*. The four outwardly facing lateral side faces 5, 6, 7, 8 are pairwise plane parallel to each other (with 5 ∥ 7 and 6 ∥ 8). Two of the outwardly facing lateral side faces 5, 6 have a surface normal with a component that is parallel to the intrinsic polarization axis *n_{P}*, whereas the corresponding opposite lateral side faces 7, 8 have a surface normal with a component that is anti-parallel to the intrinsic polarization axis *n_{P}*. The sensor element 1 has an optional opening 9 penetrating the sensor block 2 in an axial direction from the first end face 3 to the second end face 4. The opening 9 is defined by inwardly oriented lateral side faces 10, here shaped as a cylinder surface. The central opening 9 is useful for assembly purposes. Like for the peripheral sides defined by the outwardly facing lateral side faces 5, 6, 7, 8 portions of the inwardly facing lateral side faces 10 have a surface normal with a component that is parallel to the intrinsic polarization axis *n_{P}*, whereas corresponding opposite portions have a surface normal with a component that is anti-parallel to the intrinsic polarization axis *n_{P}*.

The sensor element 1 further comprises sensor electrodes 11, 12 adapted for capturing a sensor signal, wherein the sensor electrodes 11, 12 comprise a first sensor electrode 11 arranged at the first end 3 of the sensor block 2 and a second sensor electrode 12 arranged at the second end 4 of the sensor block 2. In the embodiment shown in Figs.1-3, the sensor electrodes 11, 12 essentially cover all of the respective end faces 3, 4. The sensor electrodes 11, 12 are thus adapted to measure polarization charges in a direction perpendicular to the intrinsic polarization axis *n_{P}* resulting from a shear mode deformation of the sensor block 2 in a direction parallel to the end faces 3, 4.

The piezoelectric material of the sensor block 2 is also pyroelectric. Examples of materials that are both piezoelectric and pyroelectric and that are suited for use in shear mode accelerator devices are lithium niobate, tourmaline, YCOB, bismuth titanate, barium titanate, lead metaniobate and lithium tantalate. When the sensor element 1 is subjected to a change in temperature, the pyroelectric effect causes a charge separation resulting in surface charges observed on all those lateral side faces 5, 6, 7, 8 that have a surface normal with a component parallel to the intrinsic polarization axis *n_{P}* as indicated by "+" and "-" symbols for some of the outwardly facing lateral side faces in Figs.1 and 3. Since in a shear mode configuration this pyroelectrically generated polarization occurs in a lateral direction that is orthogonal to the axial direction in which the sensor electrodes 11, 12 capture a piezoelectric polarization signal, it is usually assumed that the pyroelectric effect can be neglected in this type of device. In practice, however, the charge build-up due to lateral polarization caused by the pyroelectric effect is seen to severely affect the noise characteristics of shear mode accelerometer devices.

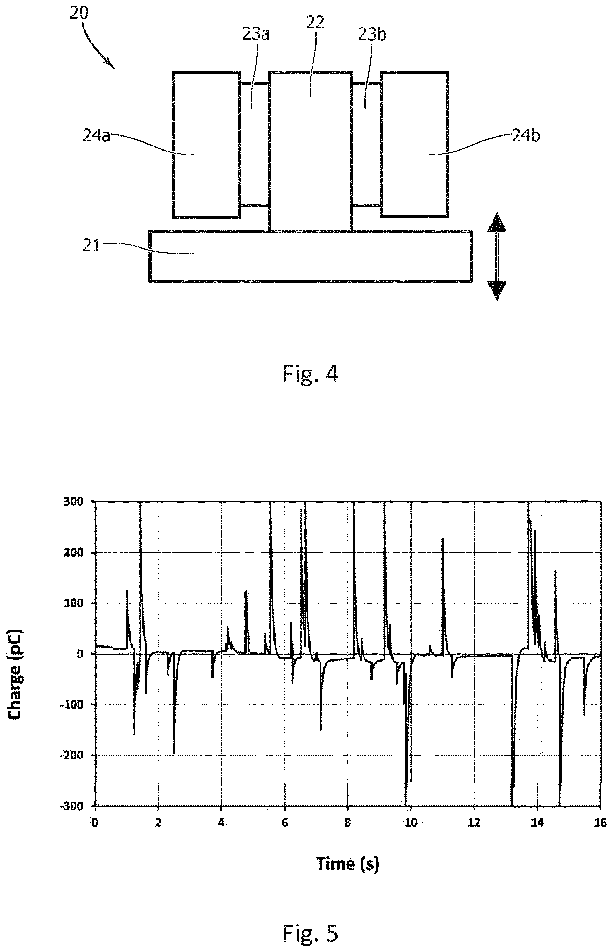

Fig.4 shows schematically an accelerometer assembly in a shear mode configuration. The accelerometer 20 comprises a base 21 carrying a centre post 22, two sensor elements 23a, 23b and respective seismic masses 24a, 24b. The sensor elements 23a, 23b may have the sensor block and sensor electrode geometry as outlined above with respect to Figs.1-3. A first end of each sensor element 23a, 23b, each carrying a first sensor electrode, is attached to the centre post 22, and a second end of each sensor element 23a, 23b, each carrying a second sensor electrode, is attached to a respective seismic mass 24a, 24b. Displacement of the base 21 and centre post 22 with respect to the seismic mass in a vertical direction as indicated by the arrow will cause a shear deformation of the sensor elements 23a, 23b in a direction parallel to the first and second end faces. A sensor signal corresponding to the piezoelectric polarization charges resulting from that shear deformation may then be captured by the sensor electrodes and passed to read-out electronics for subsequent processing (not shown). Note, that the topology of the assembly may be varied without affecting the basic idea of the shear mode configuration, as long as the assembly causes a shear mode deformation of the one or more sensor elements to generate a sensor signal. For example, the number of sensor elements may be varied, or the role of seismic mass and base can be interchanged by clamping the respective part to the accelerometer housing/frame and giving the movement of the corresponding counter-part free.

Fig.5 shows a sensor signal read-out (charge in pC on the vertical axis) in the time domain (elapsed time in s on the horizontal axis) for a shear mode accelerometer assembly with sensor elements without a discharge guard as described above with respect to Figs.1-3. The sensor signal was captured during a temperature sweep from about 20°C to about 200°C at a rate of about 20-30°C/min. Frequent and pronounced spikes in the sensor signal are observed, which are attributed to discharge pulses resulting from spontaneous recombination of pyroelectric polarization charges accumulated on the lateral side faces of the sensor elements.

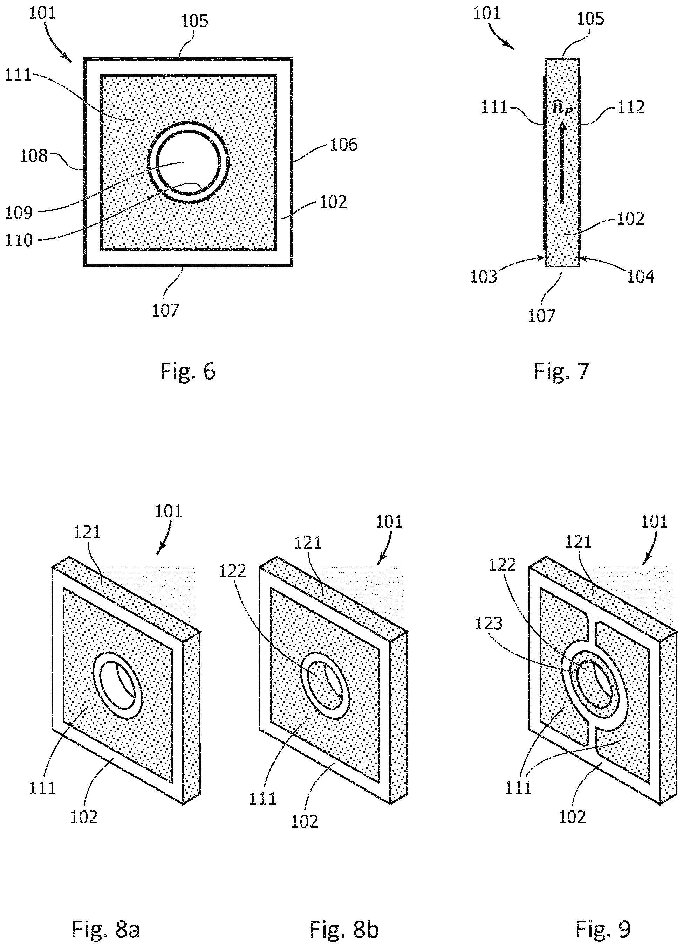

Turning to Figs.6-9, a sensor element with a discharge guard is now discussed. For the sake of comparability, the same advantageous rectangular box-shaped geometry of the sensor block as described above was chosen for all embodiments discussed here, only varying the layout of the electrodes. Note, however, that the actual shape of the sensor block may be varied without affecting the basic idea of applying a discharge guard to a shear mode sensor element. For example, the lateral contour of the sensor block and/or the corresponding sensor electrodes may have any suitable shape including circular, elliptic, square, rectangular, prism shaped, triangular, hexagonal, octagonal or otherwise polygonal. Fig.6 shows a front elevation of a sensor element 101 having a sensor block 102 and sensor electrodes 111, 112 arranged on first and second end faces 103, 104 of the sensor block 102, respectively. The sensor electrodes 111, 112 are formed by metallization applied to the end faces 103, 104. A central opening 109 is extending in an axial direction from the first end face 103 to the second end face 104. The central opening 109 is useful for assembly purposes. The sensor block 102 has outwardly facing lateral side faces 105, 106, 107, 108 defining a square shaped lateral contour, and inwardly facing lateral side faces 110 defining the central opening 109. The sensor electrodes 111, 112 are slightly retracted from the lateral edges of the end faces 103, 104, thereby increasing the resistance for electrical transport from the lateral side faces 105, 106, 107, 108, 110 to the sensor electrodes 111, 112. Fig.7 shows a side elevation of the sensor element 101 of Fig.6 with the sensor block 102 and first and second sensor electrodes 111 and 112 applied to first and second end faces 103, 104 of the sensor block 102. The sensor block 102 is made of a piezoelectric material with an intrinsic polarization axis *n_{P}* oriented parallel to the end faces 103, 104. The arrow in Fig.7 shows a projection of the intrinsic polarization axis *n_{P}* on the lateral side face 106.

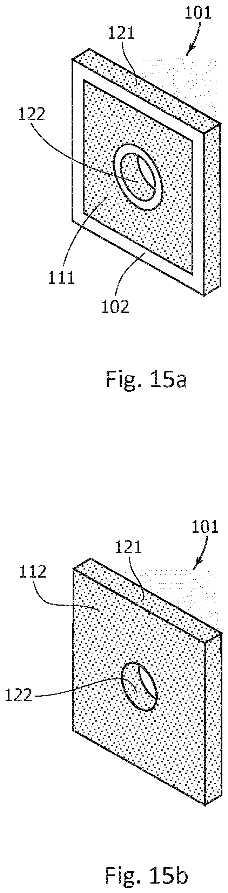

In the embodiments shown in Figs.6-9 the discharge guards are formed by metallization applied to lateral side faces. Fig.9 further includes portions of a discharge guard formed by metallization applied to end faces, which are separated from the sensor electrodes. Different layouts of the metallization may be conceived. For example, Fig.8a shows an electrode configuration according to one embodiment, wherein only the outwardly facing lateral side faces 105, 106, 107, 108 are metallized, thereby forming a peripheral discharge guard 121, whereas the inwardly facing side faces 110 are not metallized. Fig.8b shows an electrode configuration according to a further embodiment, wherein in addition to the outwardly facing lateral side faces 105, 106, 107, 108 also the inwardly facing side faces 110 are metallized, thus forming both a peripheral discharge guard 121 and a central discharge guard 122. In both cases, the metallization is applied to provide a good electrical connection all the way round along the outwardly facing lateral side faces 105, 106, 107, 108 and, in Fig.8b, along the inwardly facing lateral side faces 110. First portions of the metallization, e.g. of the oppositely oriented lateral side faces 105 and 107, may thus be seen as guard electrodes for opposite pyroelectric polarization charges, whereas portions of the metallization galvanically connecting the guard electrodes, e.g. of the remaining lateral side faces 106 and 108, may be seen as the corresponding charge transfer element. Accordingly, portions of a topologically connected metallization applied to the inwardly facing lateral side faces 110 may at the same time be considered as part of a set of guard electrodes and a charge transfer element for a discharge guard formed on the lateral side faces 110. The embodiment of Fig.8b thus comprises two discharge guards, namely a peripheral discharge guard 121 formed on the outwardly facing lateral side faces 105, 106, 107, 108, and a central discharge guard 122 formed on the inwardly facing lateral side faces 110. By providing an external galvanic connection, the two discharge guards of Fig.8b may be connected to each other to form a single discharge guard for the sensor element 101. A yet further electrode layout is seen in Fig.9. The sensor element of Fig.9 has both a peripheral 121 and a central discharge guard with a portion 122 formed on the inwardly facing lateral side faces as discussed above with respect to Fig.8b. In addition thereto, the central discharge guard of the sensor element of Fig.9 further comprises axially oriented portions 123 formed on the end faces 103, 104 adjacent to the inwardly facing lateral side faces 110, i.e. along the edges, wherein the axially oriented portions 123 and the laterally oriented portions 122 of the central discharge guard are in contact with each other. The layout shown in Fig.9 is suited for applying the metallization of the sensor electrode and the central discharge guard 123 in a single step by deposition through a shadow mask, e.g. in a wafer based production method. In all embodiments of Figs.6-9, the peripheral discharge guard 121 may be applied after cutting the individual sensor elements from a wafer, preferably stacking a plurality of individual sensor elements in an axial direction and applying a metallization to the cut-faces. A yet further electrode layout is seen in Fig.15, wherein Fig. 15a shows a front side, and Fig. 15b shows a backside of the the sensor layout of a sensor element 101. The sensor element 101 has a sensor block 102 as described above. The sensor element 101 of Fig.15 has a peripheral discharge guard 121 and a central discharge guard 122. Both the peripheral and the central discharge guards are formed by a metallization that is applied to provide a good electrical connection all the way round along the outwardly and inwardly facing lateral side faces of the sensor block 102, respectively. The electrode layout further includes a first sensor electrode 111 on the front side, and a second sensor electrode 112 on the back side. In this particular embodiment, the front side sensor electrode 111 is slightly retracted from the peripheral and the inner edge, so as to ensure a good separation between the front side electrode 111 and the peripheral and central discharge guards 121, 122 in the same manner as e.g. for the embodiment shown in Fig.8b. However in this particular embodiment, the back side sensor electrode 112 covers the entire end surface extending all the way to the peripheral and inner edges. The back side sensor electrode 112 therefore has good electrical contact with the peripheral and central discharge guards 121, 122 all around the periphery and all around the inner edge. Such an embodiment is simple to produce, e.g. by applying a patterned conductive layer/metallization corresponding to front side electrodes 111 on the front side of e.g. a wafer; then cutting out individual sensor blocks and optionally forming through holes as desired; and finally metallizing the sensor block from the back side with a non-directional coating technique so as to cover both the back side, any inwardly facing lateral surfaces, and the outwardly facing lateral surfaces, thereby forming the back side electrode 112, the central discharge guard 122, and the peripheral discharge guard 121 in one go.

### EXAMPLES

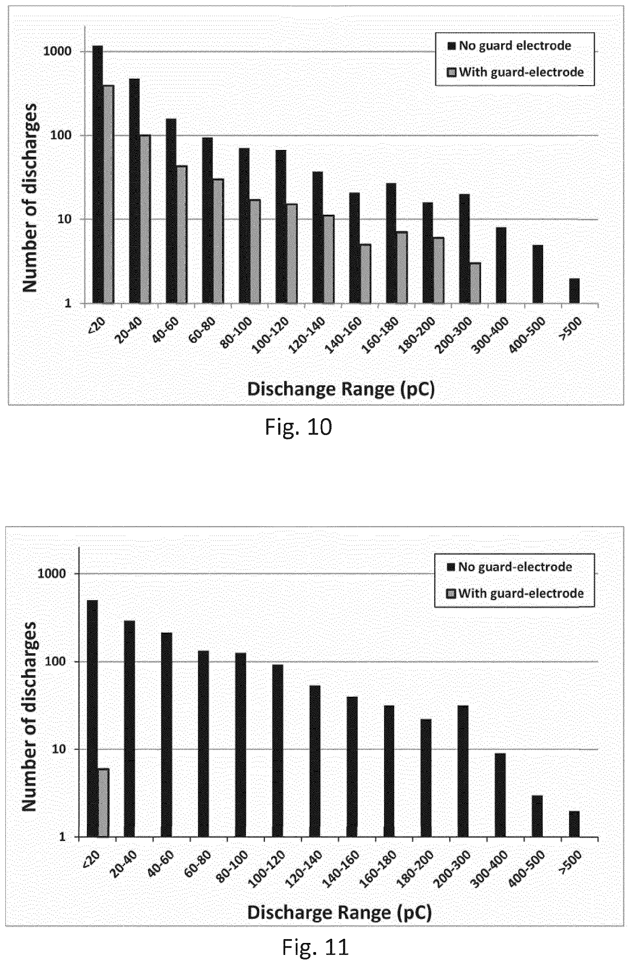

Figs.10-14 illustrate the improvement in noise behaviour achieved according to the following examples. In all examples, the sensor elements where mounted in a shear mode accelerometer assembly as discussed above with respect to Fig.4, wherein a first sensor element with a discharge guard and a second sensor element without a discharge guard were mounted in the same assembly. All sensor elements had a box-shaped sensor block made of lithium niobate with square 10mm x 10mm end faces, a thickness measured in the axial direction of 0,5mm and a central opening as illustrated above with respect to Figs.1-3 and Figs.6-9. The pyroelectrically generated noise was captured at the sensor electrodes during temperature sweeps between about 20°C and 200°C at a temperature sweep rate of about 20-30°C/min. For the purpose of characterizing the sensor elements with respect to their pyroelectric noise behaviour, the accelerometer devices where kept at rest during the temperature sweeps to avoid any contribution from a piezoelectric signal.

### Example 1

Comparison of a sensor element with discharge guard according to the embodiment shown in Fig.8a to a reference sensor element without a discharge guard; the diagram of Fig.10 shows the number of discharge pulses observed in the sensor signal during a predetermined number of temperature sweeps classified by the maximum charge observed in the respective discharge pulses. Solid columns represent pulse counts for the sensor element without discharge guard and hatched columns represent pulse counts for the sensor element equipped with a peripheral discharge guard. Note the logarithmic scale of the vertical axis. A reduction by (71 ±9)% in the number of discharges and a corresponding reduction in total discharge charge by (77 ±6)% is achieved by the peripheral discharge guard alone.

### Example 2

Comparison of a sensor element with discharge guards according to the embodiment shown in Fig.8b to a reference sensor element without a discharge guard; the diagram of Fig.11 shows the number of discharge pulses observed in the sensor signal during a predetermined number of temperature sweeps classified by the maximum charge observed in the respective discharge pulses. Solid columns represent pulse counts for the sensor element without discharge guard and hatched columns represent pulse counts for the sensor element equipped with both a peripheral and a central discharge guard. A reduction by (99,5 ±0,6)% in the number of discharges and a corresponding reduction in total discharge charge by (99,4 ±1,2)% is achieved by the full discharge guard including the metallization of both the outwardly facing and the inwardly facing lateral side faces.

### Example 3

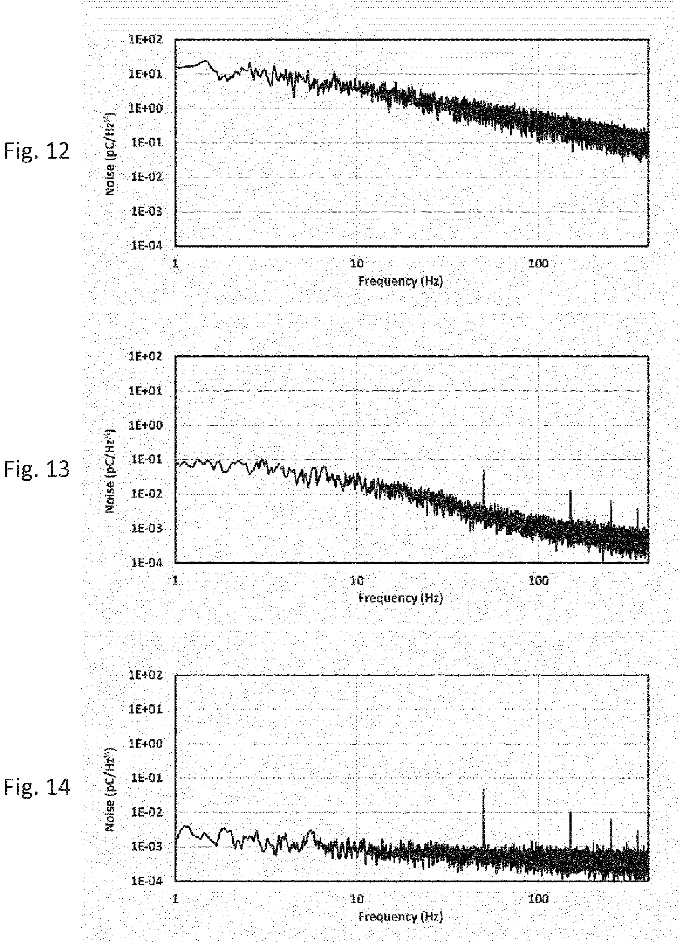

Comparison of noise spectra; Fig.12 shows a noise spectrum acquired during a temperature sweep for a sensor element without discharge guard. Fig.13 shows a noise spectrum acquired during the same temperature sweep as in Fig.12 for a sensor element with both peripheral and central discharge guards according to the embodiment shown in Fig.8b. Fig.14 shows a reference noise spectrum acquired while keeping the temperature constant at room temperature. A comparison of Figs.12 and 13 shows a clear reduction of the pyroelectrically generated noise signal by a factor of 100.

## Claims

1. Piezoelectric shear mode sensor element (101) for a shear mode sensor device, the sensor element (101) comprising
- a sensor block (102) made of a piezoelectric material having an intrinsic polarization axis, wherein the piezoelectric material is also pyroelectric, wherein the sensor block (102) in an axial direction has axial ends (103, 104), and wherein the sensor block (102) in lateral directions perpendicular to the axial direction has lateral side faces (105, 106, 107, 108, 110); and
- sensor electrodes (111, 112) arranged at the axial ends (103, 104) of the sensor block (102), the sensor electrodes being adapted for capturing a shear mode sensor signal;
**characterized in that** the sensor element (101) further comprises
- a discharge guard (121, 122) made of an electrically conductive material comprising free charge carriers, the discharge guard thus being adapted to locally alter and/or rearrange charges in response to pyroelectric displacement charges on the lateral side faces (105, 106, 107, 108, 110) of the sensor block (102), wherein the discharge guard (121, 122) comprises at least a first guard electrode arranged on a first lateral side face (105, 106, 107, 108, 110) of the sensor block (102), the first lateral side face (105, 106, 107, 108, 110) comprising a surface normal with a component that is parallel to the intrinsic polarization axis, wherein the discharge guard (121, 122) further comprises at least a second guard electrode arranged on a second lateral side face of the sensor block, the second lateral side face comprising a surface normal with a component that is anti-parallel to the intrinsic polarization axis, wherein the discharge guard (121, 122) further comprises a charge transfer element connecting the first and second guard electrodes to each other.

2. A sensor element according to claim 1, wherein the first and second guard electrodes are integrally formed with the charge transfer element.

3. A sensor element according to any of the preceding claims, wherein the discharge guard (121, 122) comprises a metallization applied on the lateral side faces (105, 106, 107, 108, 110) of the sensor block (102).

4. A sensor element according to claim 3, wherein the metallization is selected from the group of chromium, titanium, nickel, gold, and alloys thereof.

5. A sensor element according to claim 3, wherein the metallization is selected from the group of palladium, platinum, ruthenium, rhodium, osmium, iridium, and alloys thereof.

6. A sensor element according to any of the preceding claims, wherein the piezoelectric material is one of lithium niobate, tourmaline, yttrium calcium oxyborate (YCOB), bismuth titanate, barium titanate, lead metaniobate, lithium tantalate, lead zirconium titanate (PZT), polycrystalline ceramics, ferroelectric relaxor-based materials, lead magnesium niobate titanate (PMNT), and ternary lead indium niobate titanate (PIMNT).

7. A sensor element according to any of the preceding claims, wherein the sensor block (102) comprises an opening (109) penetrating the sensor block (102) in the axial direction, the opening (109) being defined by inwardly facing lateral side faces (110).

8. A sensor element according to claim 7, wherein the inwardly facing lateral side faces (110) are provided with a further discharge guard (122).

9. A sensor element according to claim 8, wherein the further discharge guard is electrically connected to the discharge guard.

10. A sensor element according to any of the preceding claims, wherein the sensor electrodes are planar and arranged on respective first and second planar end faces of the sensor block (102).

11. A sensor element according to any of the preceding claims, wherein one of the sensor electrodes (112) is in electrical contact with one or more discharge guards (121, 122), and wherein at least a further one of the sensor electrodes (111) is electrically separated from the discharge guards (121, 122).

12. Method of producing a sensor element (101) according to any of the preceding claims, the method comprising
- providing a wafer of a piezoelectric material, wherein the intrinsic polarization axis of the piezoelectric material is oriented parallel to a plane defined by the wafer and wherein an axial direction is perpendicular to said plane,
- forming at least a first sensor electrode (111) on a first side of the wafer and at least a second sensor electrode (112) on a second side of the wafer in axial alignment with the first electrode (111),
- cutting the wafer to obtain an individual sensor element (101),
**characterized in that** the method further comprises
- forming on at least two lateral side faces (105, 106, 107, 108, 110) of the individual sensor element (101) a discharge guard (121, 122) from an electrically conductive material comprising free charge carriers, the discharge guard thus being adapted to locally alter and/or rearrange charges in response to pyroelectric displacement charges on the lateral side faces (105, 106, 107, 108, 110) of the sensor element (101), wherein the discharge guard (121, 122) comprises at least a first guard electrode arranged on a first lateral side face (105, 106, 107, 108, 110) of the sensor block (102), the first lateral side face (105, 106, 107, 108, 110) comprising a surface normal with a component that is parallel to the intrinsic polarization axis, and wherein the discharge guard (121, 122) further comprises at least a second guard electrode arranged on a second lateral side face of the sensor block, the second lateral side face comprising a surface normal with a component that is anti-parallel to the intrinsic polarization axis, wherein the discharge guard (121, 122) further comprises a charge transfer element connecting the first and second guard electrodes to each other.

13. Method according to claim 12, wherein forming a sensor electrode comprises metallizing axial end faces of the sensor block (102) and/or forming a discharge guard (121, 122) comprises applying a metallization on lateral side faces (105, 106, 107, 108, 110) of the sensor block (102).

## Patentansprüche

1. Piezoelektrisches Schermodussensorelement (101) für eine Schermodussensorvorrichtung, wobei das Sensorelement (101) umfasst
- einen Sensorblock (102), der aus einem piezoelektrischen Material gefertigt ist, welches eine intrinsische Polarisationsachse aufweist, wobei das piezoelektrische Material ebenfalls pyroelektrisch ist, wobei der Sensorblock (102) in einer axialen Richtung axiale Enden (103, 104) aufweist, und wobei der Sensorblock (102) in lateralen Richtungen senkrecht zur axialen Richtung laterale Seitenflächen (105, 106, 107, 108, 110) aufweist; und
- Sensorelektroden (111, 112), die an den axialen Enden (103, 104) des Sensorblocks (102) angeordnet sind, wobei die Sensorelektroden dafür ausgebildet sind, ein Schermodussensorsignal zu erfassen;
**dadurch gekennzeichnet, dass** das Sensorelement (101) weiter umfasst
- einen Entladungsschutz (121, 122), der aus einem elektrisch leitfähigen Material gefertigt ist, welches freie Ladungsträger umfasst, wobei der Entladungsschutz dadurch dazu ausgebildet ist, Ladungen in Antwort auf pyroelektrische Verschiebungsladungen an den lateralen Seitenflächen (105, 106, 107, 108, 110) des Sensorblocks (102) lokal zu verändern und/oder neu anzuordnen, wobei der Entladungsschutz (121, 122) mindestens eine erste Schutzelektrode umfasst, die an einer ersten lateralen Seitenfläche (105, 106, 107, 108, 110) des Sensorblocks (102) angeordnet ist, wobei die erste laterale Seitenfläche (105, 106, 107, 108, 110) eine Oberfläche umfasst, die zu einer Komponente normal ist, welche zur intrinsischen Polarisationsachse parallel ist, wobei der Entladungsschutz (121, 122) weiter mindestens eine zweite Schutzelektrode umfasst, die an einer zweiten lateralen Seitenfläche des Sensorblocks angeordnet ist, wobei die zweite laterale Seitenfläche eine Oberfläche umfasst, die zu einer Komponente normal ist, welche zur intrinsischen Polarisationsachse antiparallel ist, wobei der Entladungsschutz (121, 122) weiter ein Ladungsübertragungselement umfasst, das die erste und zweite Schutzelektrode miteinander verbindet.

2. Sensorelement nach Anspruch 1, wobei die erste und zweite Schutzelektrode einstückig mit dem Ladungsübertragungselement gebildet sind.

3. Sensorelement nach einem der vorstehenden Ansprüche, wobei der Entladungsschutz (121, 122) eine Metallisierung umfasst, die an den lateralen Seitenflächen (105, 106, 107, 108, 110) des Sensorblocks (102) aufgebracht ist.

4. Sensorelement nach Anspruch 3, wobei die Metallisierung ausgewählt ist aus der Gruppe aus Chrom, Titan, Nickel, Gold, und Legierungen davon.

5. Sensorelement nach Anspruch 3, wobei die Metallisierung ausgewählt ist aus der Gruppe aus Palladium, Platin, Ruthenium, Rhodium, Osmium, Iridium, und Legierungen davon.

6. Sensorelement nach einem der vorstehenden Ansprüche, wobei das piezoelektrische Material eines ist aus Lithiumniobat, Turmalin, Yttrium-Calcium-Oxyborat (YCOB), Bismuttitanat, Bariumtitanat, Bleimetaniobat, Lithiumtantalat, Blei-Zirkonat-Titanat (PZT), polykristallinen Keramiken, Relaxor-basierten ferroelektrischen Materialien, Blei-Magnesium-Niobat-Titanat (PMNT), und ternärem Blei-Indium-Niobat-Titanat (PIMNT).

7. Sensorelement nach einem der vorstehenden Ansprüche, wobei der Sensorblock (102) eine Öffnung (109) umfasst, die den Sensorblock (102) in der axialen Richtung durchdringt, wobei die Öffnung (109) von nach innen gewandten lateralen Seitenflächen (110) definiert wird.

8. Sensorelement nach Anspruch 7, wobei die nach innen gewandten lateralen Seitenflächen (110) mit einem weiteren Entladungsschutz (122) versehen sind.

9. Sensorelement nach Anspruch 8, wobei der weitere Entladungsschutz elektrisch mit dem Entladungsschutz verbunden ist.

10. Sensorelement nach einem der vorstehenden Ansprüche, wobei die Sensorelektroden plan und an jeweiligen ersten und zweiten planen Endflächen des Sensorblocks (102) angeordnet sind.

11. Sensorelement nach einem der vorstehenden Ansprüche, wobei eine der Sensorelektroden (112) mit einem oder mehreren Entladungsschutzen (121, 122) in elektrischem Kontakt steht, und wobei mindestens eine weitere der Sensorelektroden (111) elektrisch von den Entladungsschutzen (121, 122) getrennt ist.

12. Verfahren zum Herstellen eines Sensorelements (101) nach einem der vorstehenden Ansprüche, wobei das Verfahren umfasst
- Bereitstellen eines Wafers aus einem piezoelektrischen Material, wobei die intrinsische Polarisationsachse des piezoelektrischen Materials parallel zu einer Ebene ausgerichtet ist, die vom Wafer definiert wird, und wobei eine axiale Richtung zu der Ebene senkrecht ist,
- Bilden von mindestens einer ersten Sensorelektrode (111) auf einer ersten Seite des Wafers, und mindestens einer zweiten Sensorelektrode (112) auf einer zweiten Seite des Wafers in axialer Ausrichtung zur ersten Elektrode (111),
- Schneiden des Wafers, um ein einzelnes Sensorelement (101) zu erhalten,
**dadurch gekennzeichnet, dass** das Verfahren weiter umfasst
- Bilden, an mindestens zwei lateralen Seitenflächen (105, 106, 107, 108, 110) des einzelnen Sensorelements (101), eines Entladungsschutzes (121, 122) aus einem elektrisch leitfähigen Material, das freie Ladungsträger umfasst, wobei der Entladungsschutz dadurch dazu ausgebildet ist, Ladungen in Antwort auf pyroelektrische Verschiebungsladungen an den lateralen Seitenflächen (105, 106, 107, 108, 110) des Sensorelements (101) lokal zu verändern und/oder neu anzuordnen, wobei der Entladungsschutz (121, 122) mindestens eine erste Schutzelektrode umfasst, die auf einer ersten lateralen Seitenfläche (105, 106, 107, 108, 110) des Sensorblocks (102) angeordnet ist, wobei die erste laterale Seitenfläche (105, 106, 107, 108, 110) eine Oberfläche umfasst, die zu einer Komponente normal ist, welche zur intrinsischen Polarisationsachse parallel ist, und wobei der Entladungsschutz (121, 122) weiter mindestens eine zweite Schutzelektrode umfasst, die an einer zweiten lateralen Seitenfläche des Sensorblocks angeordnet ist, wobei die zweite laterale Seitenfläche eine Oberfläche umfasst, die zu einer Komponente normal ist, welche zur intrinsischen Polarisationsachse antiparallel ist, wobei der Entladungsschutz (121, 122) weiter ein Ladungsübertragungselement umfasst, das die erste und zweite Schutzelektrode miteinander verbindet.

13. Verfahren nach Anspruch 12, wobei das Bilden einer Sensorelektrode das Metallisieren von axialen Endflächen des Sensorblocks (102) umfasst, und/oder das Bilden eines Entladungsschutzes (121, 122) das Aufbringen einer Metallisierung an lateralen Seitenflächen (105, 106, 107, 108, 110) des Sensorblocks (102) umfasst.

## Revendications

1. Élément capteur à mode de cisaillement piézoélectrique (101) pour un dispositif capteur à mode de cisaillement, l'élément capteur (101) comprenant :
- un bloc capteur (102) constitué d'un matériau piézoélectrique ayant un axe de polarisation intrinsèque, dans lequel le matériau piézoélectrique est également pyroélectrique, dans lequel le bloc capteur (102) dans une direction axiale présente des extrémités axiales (103, 104) et dans lequel le bloc capteur (102) dans des directions latérales perpendiculaires à la direction axiale présente des faces latérales (105, 106, 107, 108, 110) ; et
- des électrodes de capteur (111, 112) disposées aux extrémités axiales (103, 104) du bloc capteur (102), les électrodes de capteur étant adaptées à capturer un signal de capteur à mode de cisaillement ;
**caractérisé en ce que** l'élément capteur (101) comprend en outre :
- un protecteur de décharge (121, 122) constitué d'un matériau électriquement conducteur comprenant des porteurs de charge libres, le protecteur de décharge étant ainsi adapté à modifier et/ou réarranger localement des charges en réponse à des charges de déplacement pyroélectriques sur les faces latérales (105, 106, 107, 108, 110) du bloc capteur (102), dans lequel le protecteur de décharge (121, 122) comprend au moins une première électrode de protecteur disposée sur une première face latérale (105, 106, 107, 108, 110) du bloc capteur (102), la première face latérale (105, 106, 107, 108, 110) comprenant une normale à la surface avec une composante qui est parallèle à l'axe de polarisation intrinsèque, dans lequel le protecteur de décharge (121, 122) comprend en outre au moins une seconde électrode de protecteur disposée sur une seconde face latérale du bloc capteur, la seconde face latérale comprenant une normale à la surface avec une composante qui est anti-parallèle à l'axe de polarisation intrinsèque, dans lequel le protecteur de décharge (121, 122) comprend en outre un élément de transfert de charge reliant les première et seconde électrodes de protecteur l'une à l'autre.

2. Elément capteur selon la revendication 1, dans lequel les première et seconde électrodes de protecteur sont formées d'un seul tenant avec l'élément de transfert de charge.

3. Elément capteur selon l'une quelconque des revendications précédentes, dans lequel le protecteur de décharge (121, 122) comprend une métallisation appliquée sur les faces latérales (105, 106, 107, 108, 110) du bloc capteur (102).

4. Elément capteur selon la revendication 3, dans lequel la métallisation est choisie dans le groupe comprenant le chrome, le titane, le nickel, l'or et leurs alliages.

5. Elément capteur selon la revendication 3, dans lequel la métallisation est choisie dans le groupe comprenant le palladium, le platine, le ruthénium, le rhodium, l'osmium, l'iridium et leurs alliages.

6. Elément de capteur selon l'une quelconque des revendications précédentes, dans lequel le matériau piézoélectrique est l'un parmi le niobate de lithium, la tourmaline, l'oxyborate de calcium et d'yttrium (YCOB), le titanate de bismuth, le titanate de baryum, le métaniobate de plomb, le tantalate de lithium, le titanate de zirconium (PZT), les céramiques polycristallines, les matériaux à base relaxeur ferroélectrique, le titanate niobate de magnésium plomb (PMNT) et le titanate niobate d'indium plomb ternaire (PIMNT).

7. Elément capteur selon l'une quelconque des revendications précédentes, dans lequel le bloc capteur (102) comprend une ouverture (109) pénétrant dans le bloc capteur (102) dans la direction axiale, l'ouverture (109) étant définie par des faces latérales tournées vers l'intérieur (110).

8. Elément de capteur selon la revendication 7, dans lequel les faces latérales tournées vers l'intérieur (110) sont pourvues d'un autre protecteur de décharge (122).

9. Elément de capteur selon la revendication 8, dans lequel l'autre protecteur de décharge est relié électriquement au protecteur de décharge.

10. Elément de capteur selon l'une quelconque des revendications précédentes, dans lequel les électrodes de capteur sont planes et agencées sur des première et seconde faces d'extrémité planes respectives du bloc de capteur (102).

11. Elément de capteur selon l'une quelconque des revendications précédentes, dans lequel l'une des électrodes de capteur (112) est en contact électrique avec un ou plusieurs protecteurs de décharge (121, 122), et dans lequel au moins une autre des électrodes de capteur (111) est séparée électriquement des protecteurs de décharge (121, 122).

12. Procédé de fabrication d'un élément capteur (101) selon l'une quelconque des revendications précédentes, le procédé comprenant :
- la fourniture d'une tranche en un matériau piézoélectrique, où l'axe de polarisation intrinsèque du matériau piézoélectrique est orienté parallèlement à un plan défini par la tranche et où une direction axiale est perpendiculaire audit plan ;
- la formation d'au moins une première électrode de capteur (111) sur un premier côté de la tranche et d'au moins une seconde électrode de capteur (112) sur un second côté de la tranche en alignement axial avec la première électrode (111) ;
- la découpe de la tranche pour obtenir un élément capteur individuel (101) ;
**caractérisé en ce que** le procédé comprend en outre :
- la formation sur au moins deux faces latérales (105, 106, 107, 108, 110) de l'élément capteur individuel (101) d'un protecteur de décharge (121, 122) en un matériau électriquement conducteur comprenant des porteurs de charge libres, le protecteur de décharge étant ainsi adapté à modifier et/ou réarranger localement des charges en réponse aux charges de déplacement pyroélectrique sur les faces latérales (105, 106, 107, 108, 110) de l'élément capteur (101), dans lequel le protecteur de décharge (121, 122) comprend au moins une première électrode de protecteur disposée sur une première face latérale (105, 106, 107, 108, 110) du bloc capteur (102), la première face latérale (105, 106, 107, 108, 110) comprenant une normale à la surface avec une composante parallèle à l'axe de polarisation intrinsèque, et dans lequel le protecteur de décharge (121, 122) comprend en outre au moins une seconde électrode de protecteur disposée sur une seconde face latérale du bloc capteur, la seconde face latérale comprenant une normale à la surface avec une composante antiparallèle à l'axe de polarisation intrinsèque, dans lequel le protecteur de décharge (121, 122) comprend en outre un élément de transfert de charge reliant les première et seconde électrodes de protecteur l'une à l'autre.

13. Procédé selon la revendication 12, dans lequel la formation d'une électrode de capteur comprend la métallisation des faces d'extrémité axiale du bloc capteur (102) et/ou la formation d'un protecteur de décharge (121, 122) comprenant l'application d'une métallisation sur des faces latérales (105, 106, 107, 108, 110) du bloc capteur (102).
